# EUROPÄISCHE PATENTANMELDUNG

(11) **EP 4 389 658 A1**
(43) Veröffentlichungstag der Anmeldung: **26.06.2024**
(21) Anmeldenummer: 23217424.3
(22) Anmeldetag: 18.12.2023
(51) Int. Cl.: B65G 47/96

(54) **SORTIERFÖRDERER, INSBESONDERE QUERGURTSORTER ODER KIPPSCHALENSORTER, ZUM TRANSPORTIEREN UND SORTIEREN VON STÜCKGUT**

(30) Priorität: 21.12.2022 DE 102022134280
(71) Anmelder: MK Klassik GmbH, 85540 Haar (DE); Coop Systems GmbH, 83666 Waakirchen (DE)
(72) Erfinder: Köstlmeier, Manfred, 85540 Haar (DE)
(74) Vertreter: Liebl, Thomas

(57) **Zusammenfassung**

Die Erfindung betrifft ein Sortierförderer (1), insbesondere Quergurtsorter oder Kippschalensorter, zum Transportieren und Sortieren von Stückgut, mit mehreren, auf einer Förderbahn bewegten, zu einem Förderwagenzug gekoppelten oder individuell verfahrbaren Förderwagen (2), auf dem das Stückgut aufliegend transportierbar ist, wobei zwischen zwei unmittelbar aufeinander folgenden Förderwagen (2) des Förderwagenzuges ein Spalt (5) ausgebildet ist, dadurch gekennzeichnet, dass wenigstens ein Ausgleichselement (6) vorgesehen ist, das den Spalt (5) zwischen den zwei unmittelbar aufeinander folgenden Förderwagen (2), bezogen auf die Spalt-Längsrichtung und/oder die Spalt-Querrichtung, wenigstens bereichsweise verschließt und das geeignet und ausgebildet ist, bei fahrtbedingten relativen Abstandsänderungen zwischen einem Hinterkantenbereich (7) einer Hinterkante (3) des in Fahrtrichtung vorderen Förderwagens (2) und einem zugeordneten Vorderkantenbereich (8) einer Vorderkante (4) des in Fahrtrichtung hinteren Förderwagens (2) Ausgleichsbewegungen durchzuführen, um den Spalt (5) im Wesentlichen verschlossen zu halten.

## Beschreibung

Die Erfindung betrifft einen Sortierförderer, insbesondere einen Quergurtsorter oder einen Kippschalensorter, zum Transportieren und Sortieren von Stückgut nach dem Oberbegriff des Anspruchs 1. Zudem betrifft die Erfindung ein Ausgleichselement zur Verwendung mit Förderwagen eines Sortierförderers nach Anspruch 17 sowie ein Verfahren zum Betreiben eines Sortierförderers nach dem Oberbegriff des Anspruchs 18.

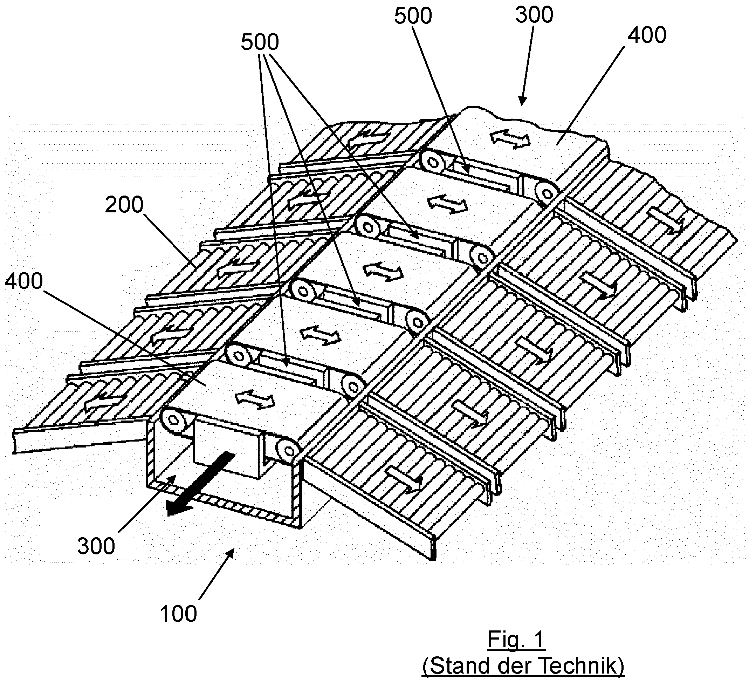

Sortierförderer, auch Verteilförderer genannt, sind Stückgut-Sortiersysteme zum Identifizieren von in ungeordneter Reihenfolge ankommendem Stückgut aufgrund vorgegebener Unterscheidungsmerkmale und zum Verteilen auf Ziele, die nach den jeweiligen Erfordernissen festgelegt werden (siehe VDI-Richtlinie 3619). Der übliche Grundaufbau von Sortierfördern umfasst entsprechend der Darstellung in Figur 1 eine Sortierstrecke 100, wobei längs dieser Sortierstrecke 100 aufeinanderfolgend Beladestellen (nicht gezeigt) und Entladestellen 200 angeordnet sind. Auf der Sortierstrecke 100 werden aufeinanderfolgend Förderwagen 300, auch als Carrier bezeichnet, geführt und angetrieben. Wie in der, den Stand der Technik zeigenden Figur 1 dargestellt, umfasst der Sortierförderer somit mehrere auf einer Förderbahn bewegte, zu einem Förderwagenzug gekoppelte oder individuell verfahrbare Förderwagen 300, auf dem das Stückgut aufliegend transportiert werden kann. Wie dies weiter aus der, den Stand der Technik zeigenden Figur 1 gut ersichtlich ist, ist zwischen zwei unmittelbar aufeinanderfolgenden Förderwagen 300, insbesondere zwischen einer Hinterkante eines in Fahrtrichtung vorderen Förderwagens 300 und einer Vorderkante eines in Fahrtrichtung hinteren Förderwagens, des Förderwagenzuges jeweils ein Spaltabstand bzw. Spalt 500 ausgebildet. Im vorliegenden Beispielfall der Figur 1 ist der Sortierförderer als Quergurtsorter ausgebildet, bei dem die Förderwagen 300 jeweils mit einem endlos um Umlenkrollen umlaufenden, quer zur Fahrtrichtung der Förderwagen 300 antreibbaren Quergurt 400 versehen sind, um das auf dem Quergurt 400 aufliegend transportierte Stückgut (nicht gezeigt) beispielsweise an den hier gezeigten Entladestellen ausschleusen zu können.

Aufgrund der hohen Geschwindigkeit derartiger Sortierförderer, mit denen Durchsätze von mehr als 10.000 Sortier- bzw. Stückgütern pro Stunde erreicht werden, besteht die Gefahr, dass das transportierte Stückgut in den Bereich des Spaltes 500 zwischen zwei unmittelbar aufeinanderfolgenden Förderwagen 300 gelangen kann, was wiederum die Gefahr beinhaltet, dass sich das Stückgut dann zwischen den beiden Förderwagen so anordnet und verklemmt, dass die Förderwagen entgleisen und aus der Förderbahn geworfen werden. Dies führt zu erheblichen Störungen im Betrieb derartiger Sortierförderer.

Die gleiche Problematik besteht im Grunde bei Sortierförderern, die als Kippschalensorter ausgebildet sind und bei denen auf den einzelnen Förderwagen kippbare Schalen angebracht sind, die die Aufgabe haben, dass zu transportierende Stückgut aufzunehmen. Die Kippschalen sind in ihrer Grundposition waagrecht ausgerichtet und werden erst beim Erreichen der vorgesehenen Endstelle gekippt, um das Stückgut zu entladen bzw. auszuschleusen.

Aufgabe der Erfindung ist es, einen Sortierförderer, insbesondere einen Quergurtsorter oder Kippschalensorter als Sortierförderer, zum Transportieren und Sortieren von Stückgut zur Verfügung zu stellen, mittels dem Beeinträchtigungen des Betriebes eines Förderwagenzugs, der aus mehreren, auf einer Förderbahn bewegten Förderwagen besteht, auf einfache und funktionssichere Weise zuverlässig reduziert werden können. Eine weitere Aufgabe der Erfindung ist es, ein Verfahren zum Betreiben eines derartigen Sortierförderers sowie ein Ausgleichselement für einen Sortierförderer zur Verfügung zu stellen.

Diese Aufgabe wird gelöst mit den Merkmalen der unabhängigen Patentansprüche. Vorteilhafte Ausgestaltungen sind jeweils Gegenstand der darauf rückbezogenen Unteransprüche.

Gemäß Anspruch 1 wird ein Sortierförderer, insbesondere ein Quergurtsorter oder Kippschalensorter, zum Transportieren und Sortieren von Stückgut vorgeschlagen, der mehrere, auf einer Förderbahn bewegte, zu einem Förderwagenzug gekoppelte oder individuell verfahrbare Förderwagen, auf denen das Stückgut aufliegend transportierbar ist, aufweist, vorzugsweise um das aufliegend transportierte Stückgut an festgelegten Beladestellen zu beladen und/oder an festgelegten Entladestellen zu entladen. Dabei ist zwischen zwei unmittelbar aufeinanderfolgenden Förderwagen des Förderwagenzuges, insbesondere zwischen einer Hinterkante eines in Fahrtrichtung vorderen Förderwagens und einer Vorderkante eines in Fahrtrichtung hinteren Förderwagens des Förderwagenzuges, ein Spaltabstand bzw. Spalt ausgebildet.

Erfindungsgemäß ist wenigstens ein Ausgleichselement vorgesehen, das den Spalt zwischen den zwei unmittelbar aufeinanderfolgenden Förderwagen, bezogen auf die Spalt-Längsrichtung und/oder die Spalt-Querrichtung, wenigstens bereichsweise verschließt und das geeignet und ausgebildet ist, bei fahrtbedingten relativen Abstandsänderungen zwischen einem Hinterkantenbereich einer Hinterkante des in Fahrtrichtung vorderen Förderwagens und einem zugeordneten Vorderkantenbereich einer Vorderkante des in Fahrtrichtung hinteren Förderwagens Ausgleichsbewegungen durchzuführen, um den Spalt im Wesentlichen verschlossen zu halten.

Damit kann auf einfache und funktionssichere Weise zuverlässig vermieden werden, dass ein mittels der Förderwagen transportiertes Stückgut in den Spalt zwischen zwei unmittelbar aufeinanderfolgenden Förderwagen gelangen bzw. fallen kann, was wiederum dazu führt, dass die Gefahr eines Entgleisens der Förderwagen bzw. die Gefahr, dass die Förderwagen aus der Förderbahn geworfen werden, erheblich reduziert bzw. vermieden wird.

Um dieses Ziel auf besonders vorteilhafte und funktionssichere Weise zu erreichen, ist gemäß einer besonders bevorzugten Ausgestaltung vorgesehen, dass das wenigstens eine Ausgleichselement den Spalt zwischen zwei unmittelbar aufeinanderfolgenden Förderwagen, bezogen auf die Spalt-Längsrichtung und/oder die Spalt-Querrichtung, überwiegend oder im Wesentlichen vollständig verschließt. Alternativ oder zusätzlich hat es sich in diesem Zusammenhang weiter als besonders vorteilhaft erwiesen, wenn das wenigstens eine Ausgleichselement, bezogen auf die Hochachsenrichtung in einem oberseitigen Bereich der Förderwagen angeordnet ist, insbesondere im Wesentlichen oberflächenbündig mit den Oberseiten der beiden Förderwagen angeordnet ist.

Das wenigstens eine Ausgleichselement kann grundsätzlich auf unterschiedliche Art und Weise, insbesondere durch unterschiedliche Materialien und Formgebungen gebildet sein. Besonders bevorzugt ist das wenigstens eine Ausgleichselement jedoch geeignet und ausgebildet, den Spalt durch Ausdehnung des Ausgleichselementes bei einer Abstandsvergrößerung und durch Zusammenziehen des Ausgleichselementes bei einer Abstandsverringerung im Wesentlichen verschlossen zu halten. Durch dieses Ausdehnen und Zusammenziehen des Ausgleichselementes wird auf vorteilhafte Weise sichergestellt, dass das Ausgleichselement selbst im Wesentlichen immer nur den Spalt bzw. Spaltabstand überbrückt, ohne jedoch selbst Gefahr zu laufen, beispielsweise in den Bereich der Fahrrollen der Förderwagen zu gelangen und dort gegebenenfalls ein Entgleisen der Förderwagen zu bewirken. Dies gelingt beispielsweise dadurch, dass das Ausgleichselement durch ein wenigstens bereichsweise elastisches Element gebildet ist, dass sich zur Durchführung der Ausgleichsbewegungen zwischen dem Hinterkantenbereich des in Fahrtrichtung vorderen Förderwagens und dem zugeordneten Vorderkantenbereich des in Fahrtrichtung hinteren Förderwagens bei einer Abstandsvergrößerung elastisch ausdehnt und bei einer Abstandsverringerung elastisch zusammenzieht.

Weiter gelingt dies, wie die erfinderseitigen Versuchte gezeigt haben, alternativ oder zusätzlich in einem besonders vorteilhaften Maße dadurch, dass das wenigstens eine Ausgleichselement durch eine Faltabdeckung, vorzugsweise durch eine ziehharmonikaartig oder zickzackartig gefaltete Lamellen-Faltabdeckung mit einer Mehrzahl von Lamellen, gebildet ist, die sich zur Durchführung der Ausgleichsbewegungen zwischen dem Hinterkantenbereich des in Fahrtrichtung vorderen Förderwagens und dem zugeordneten Vorderkantenbereich des in Fahrtrichtung hinteren Förderwagens bei einer Abstandsvergrößerung entfaltet und bei einer Abstandsverringerung zusammenfaltet. Eine derartige Faltabdeckung kann nicht nur auf besonders einfache Weise hergestellt werden, sondern zeichnet darüber hinaus auch durch eine hohe Lebensdauer und eine hohe Funktionssicherheit aus, die sich hervorragend für den rauen Betrieb in Verbindung mit einem Sortierförderer eignet. Eine derartige Faltabdeckung kann dabei zudem auch auf unterschiedliche Art und Weise hergestellt werden, so zum Beispiel mit und ohne elastische Bereiche, so dass sich auch diesbezüglich eine hohe Flexibilität im Rahmen der Herstellung und Ausbildung der Faltabdeckung ergibt, die einfach auf unterschiedliche Sortierförderer-Systeme anzupassen ist.

Gemäß einer weiteren besonders bevorzugten konkreten Ausführungsform ist wenigstens eine Montageeinrichtung vorgesehen, mittels der das wenigstens eine Ausgleichselement zum einen mittelbar oder unmittelbar an der Hinterkante des in Fahrtrichtung vorderen Förderwagens und zum anderen mittelbar oder unmittelbar an der Vorderkante des in Fahrtrichtung hinteren Förderwagens befestigt ist. Diese Befestigung erfolgt bevorzugt lösbar. Mit Hilfe einer derartigen Montageeinrichtung gelingt es auf einfache und zuverlässige Weise, das wenigstens eine Ausgleichselement in der gewünschten Weise im Bereich des Spaltes anzuordnen.

Gemäß einer weiteren besonders bevorzugten konkreten Ausgestaltung kann vorgesehen sein, dass die wenigstens eine Montageeinrichtung eine Faltabdeckungs-Halteeinrichtung, insbesondere eine wenigstens einen Teilbereich der Faltabdeckung aufnehmende Faltabdeckungs-Kassette als Faltabdeckungs-Halteeinrichtung, aufweist, mittels der die Faltabdeckung, bezogen auf die Hochachsenrichtung, von oben und/oder unten her abstützbar ist und/oder mittels der die Faltabdeckung im Spalt, vorzugsweise lage- und positionsgenau, unmittelbar oder mittelbar an einem der beiden Förderwagen, vorzugsweise unmittelbar oder mittelbar an der Hinterkante des in Fahrtrichtung vorderen Förderwagens oder an der Vorderkante des in Fahrtrichtung hinteren Förderwagens festlegbar ist, vorzugsweise lösbar festlegbar ist. Gemäß dieser konkreten Ausführungsform wird somit mit der Faltabdeckungs-Halteeinrichtung sichergestellt, dass die Faltabdeckung funktionssicher und zuverlässig im Bereich des Spaltes angeordnet wird, wobei die Anordnung an einem der beiden, den Spalt zwischen sich ausbildenden Förderwagen erfolgt. Dieser Förderwagen dient also in einer bevorzugten Doppelfunktion nicht nur zum Transport des Stückgutes, sondern gleichzeitig auch als Hilfsmittel zur Anordnung und Festlegung der Faltabdeckung im Bereich des Spaltes.

In einer diesbezüglich konkreten Ausführungsform kann vorgesehen sein, dass die Faltabdeckungs-Halteeinrichtung, insbesondere eine Faltabdeckungs-Kassette, ein, bezogen auf die Hochachsenrichtung, unteres Abstützelement aufweist, das unterhalb der Faltabdeckung verläuft, vorzugsweise unterhalb der Faltabdeckung verläuft und die Faltabdeckung aufliegend abstützt, und/oder das die Faltabdeckung auf ihrer Unterseite auf mehr als der Hälfte ihrer Längserstreckungsrichtung überdeckt und/oder abstützt. Damit gelingt eine großflächige Abstützung und Unterstützung der Faltabdeckung, wobei das Abstützelement grundsätzlich auf unterschiedlichste Weise ausgebildet sein kann. Besonders bevorzugt ist eine Ausführungsform, bei der das untere Abstützelement auf herstellungstechnisch einfache Weise durch eine untere Abstützplatte ausgebildet ist.

Weiter kann das untere Abstützelement im Grundzustand, also bei parallel zueinander ausgerichteter Vorderkante und Hinterkante zweier aufeinanderfolgender Förderwagen, dergestalt an einem ersten der beiden Förderwagen angeordnet sein, dass eine dem zweiten Förderwagen zugewandte vordere Abstützelementkante einen Spaltabstand zu dem zweiten Förderwagen aufweist und/oder im Wesentlich parallel zu der entsprechend zugeordneten Vorderkante oder Hinterkante des zweiten Förderwagens ausgerichtet ist. Ein derartiger Spaltabstand zwischen der Abstützelementkante und dem zweiten Vorderwagen bewirkt, dass die beiden Förderwagen bei Bergauffahrten des Förderwagenzuges nicht miteinander kollidieren können bzw. nicht in einer den Fahrbetrieb störenden Weise miteinander kollidieren können. Der Spaltabstand ist dementsprechend so groß zu wählen, dass er sich, je nach den im konkreten Fall zu absolvierenden Bergfahrten soweit verringern kann, dass es möglichst zu keinem bzw. allenfalls nur zu einem minimalen und für den Fahrbetrieb des Förderwagenzuges unkritischen Auftreffen der Anschlagelementkante an dem zweiten Förderwagen kommt.

Grundsätzlich gibt es unterschiedliche Möglichkeiten, dies umzusetzen:
So kann gemäß einer ersten konkreten Ausgestaltung vorgesehen sein, dass das untere Abstützelement im Grundzustand bei parallel zueinander ausgerichteter Vorderkante und Hinterkante zweier aufeinanderfolgender Förderwagen dergestalt an der Vorderkante des in Fahrtrichtung hinteren Förderwagens angeordnet ist, das eine, der Hinterkante des in Fahrtrichtung vorderen Förderwagens zugewandte vordere Abstützelementkante einen Spaltabstand zu einer Hinterkante des in Fahrtrichtung vorderen Förderwagens aufweist und/oder parallel zu der Hinterkante des in Fahrtrichtung vorderen Förderwagens ausgerichtet ist. Entsprechend umgekehrt, und zwar im Sinne einer kinematischen Umkehrung, kann vorgesehen sein, dass das untere Abstützelement im Grundzustand bei parallel zueinander ausgerichteter Vorderkante und Hinterkante zweier aufeinanderfolgender Förderwagen dergestalt an der Hinterkante des in Fahrtrichtung vorderen Förderwagens angeordnet ist, das eine der Vorderkante des in Fahrtrichtung hinteren Förderwagens zugewandte vordere Abstützelementkante einen Spaltabstand zu der Vorderkante des in Fahrtrichtung hinteren Förderwagens aufweist und/oder parallel zu der Vorderkante des Fahrtrichtung hinteren Förderwagens ausgerichtet ist.

Gemäß einer weiteren besonders bevorzugten konkreten Ausgestaltung kann vorgesehen sein, dass die vordere Abstützelementkante, in Spalt-Längsrichtung gesehen, zu beiden Seiten eine Abschrägung, vorzugsweise eine geradlinig oder gestuft verlaufende Abschrägung, aufweist, die von der vorderen Abstützelementkante ausgehend, nach hinten von der vorderen Abstützelementkante weg abfällt. Dies Abschrägungen dienen dazu bzw. sind geeignet und ausgebildet dazu, bei Kurvenfahrten eine, gegenüber einer gedachten durchgehend gerade verlaufenden vorderen Abstützelementkante, größere winklige Auslenkung zwischen den beiden aufeinanderfolgenden Förderwagen zu ermöglichen und/oder einen Anschlag für den davor oder dahinter fahrenden Förderwagen auszubilden. Die Abschrägungen dienen somit kurzgesagt dazu, den Knickwinkel zwischen zwei hintereinanderfahrenden Förderwagen festzulegen und zu definieren. Dies ist insbesondere auch deshalb vorteilhaft, weil der Knickwinkel zwischen den beiden Förderwagen einen Einfluss auf die mit dem wenigstens einen Ausgleichselement durchzuführenden Ausgleichsbewegungen im Spalt hat. Diese Ausgleichsbewegungen werden hierdurch sicher beherrschbar.

Für eine konstruktiv besonders bevorzugte Ausgestaltung ist vorgesehen, dass das untere Abstützelement, bezogen auf die Spaltlänge in Spalt-Längsrichtung, in etwa in einem mittleren Bereich des Spaltes angeordnet ist, und/oder sich über mehr als die Hälfte der Spaltlänge in Spalt-Längsrichtung erstreckt. Damit gelingt eine besonders vorteilhafte Ab- und Unterstützung des jeweiligen Ausgleichselementes, was sich vorteilhaft auf die Funktionssicherheit der gesamten Anordnung auswirkt.

Gemäß einer weiteren besonders bevorzugten konkreten Ausgestaltung kann vorgesehen sein, dass die Faltabdeckungs-Halteeinrichtung, insbesondere eine Faltabdeckungs-Kassette als Faltabdeckungs-Halteeinrichtung, ein, bezogen auf die Hochachsenrichtung, oberes Abstützelement, vorzugsweise eine obere Abstützplatte, aufweist, das oberhalb der Faltabdeckung verläuft und/oder die Faltabdeckung auf ihrer Oberseite, vorzugsweise in einem bezogen auf die Faltabdeckungs-Längsrichtung mittleren Faltabdeckungsbereich, überdeckt. Ein derartiges oberes Abdeckelement kann somit einen vorteilhaften Abhebeschutz für eine Faltabdeckung als Ausgleichselement ausbilden. Dies gelingt mit einer besonders bevorzugten Ausgestaltung, bei der das obere Abdeckelement oberhalb der Faltabdeckung verläuft und/oder die Faltabdeckung auf ihrer Oberseite überdeckt, so dass die in Spalt-Längsrichtung gegenüberliegenden Abstützelementseitenkanten des oberen Abstützelementes ein Anschlagelement für die, das obere Abstützelement in Spalt-Längsrichtung zu beiden Seiten überstehenden Faltabdeckungsbereiche ausbilden und damit ein Abheben der Faltabdeckung bzw. der beiden überstehenden Faltabdeckungsbereiche in Hochachsenrichtung ganz oder nach einem definieren Verlagerungsweg blockieren.

Grundsätzlich ist ein Aufbau möglich, bei dem lediglich ein oberes Abstützelement bzw. lediglich ein unteres Abstützelement vorgesehen ist. Insbesondere für die Bereitstellung einer besonders bevorzugten Kassettenlösung ist es jedoch vorteilhaft, wenn die Faltabdeckungs-Halteeinrichtung ein oberes Abstützelement und ein unteres Abstützelement aufweist. In diesem Fall kann dann die Faltabdeckung wenigstens zum Teil zwischen dem unteren Abstützelement und dem oberen Abstützelement aufgenommen sein, was eine besonders funktionssichere Positionierung und Anordnung der Faltabdeckung bewirkt.

Insbesondere zur Ausbildung einer Faltabdeckungs-Kassette ist es vorteilhaft, wenn das untere Abstützelement und das obere Abstützelement mittels wenigstens eines, vorzugsweise in Hochachsenrichtung ausgerichteten, Verbindungssteges miteinander verbunden sind, wobei bevorzugt vorgesehen ist, dass das untere Abstützelement und das obere Abstützelement an ihren in Fahrtrichtung gegenüberliegenden Endbereichen jeweils mittels wenigstens eines Verbindungssteges verbunden sind, insgesamt also wenigstens zwei Verbindungsstege vorhanden sind.

Gemäß einer weiteren besonders bevorzugten Ausführungsform ist wenigstens ein Fixierelement, vorzugsweise wenigstens ein Fixierstift oder Fixierbolzen als Fixierelement, vorgesehen, das die Lamellen, in Fahr- bzw. Querrichtung gesehen, durchdringt und/oder das an wenigstens einem Verbindungssteg, vorzugsweise an in Fahrtrichtung gegenüberliegenden Verbindungsstegen, gehaltert ist. Damit gelingt eine einfache, funktionssichere und zuverlässige Fixierung der Faltabdeckung an der als Faltabdeckungs-Kassette ausgebildeten Faltabdeckungs-Halteeinrichtung.

Gemäß einer weiteren besonders bevorzugten konkreten Ausgestaltung weist die Montageeinrichtung wenigstens eine erste Befestigungseinrichtung auf, mittels der die Faltabdeckungs-Halteeinrichtung, insbesondere eine Faltabdeckungs-Kassette, an einem ersten der beiden Förderwagen festlegbar ist. In diesem Zusammenhang ist gemäß einer besonders bevorzugten optionalen Ausgestaltung vorgesehen, dass wenigstens einer der Verbindungsstege der Faltabdeckungs-Halteeinrichtung die Befestigungseinrichtung aufweist oder ausbildet. Dadurch ergibt sich eine besonders vorteilhafte Doppelfunktion des wenigstens einen Verbindungssteges, der zu einer vorteilhaften Bauteilreduktion führt.

Weiter weist die Montageeinrichtung wenigstens eine weitere Befestigungseinrichtung auf, mittels der die Faltabdeckung selbst, vorzugsweise eine dem zweiten Förderwagen zugewandte endseitige Lamelle der Faltabdeckung, an dem zweiten Förderwagen festlegbar ist, vorzugsweise lösbar festlegbar ist. Mit einer derartigen konkreten Ausgestaltung der Befestigungseinrichtungen gelingt somit eine einfache und funktionssichere Anordnung bzw. Anbringung der Faltabdeckung an den beiden Förderwagen im Bereich des zu überbrückenden Spaltabstandes bzw. Spaltes. Dazu kann für einen besonders bevorzugten Montageablauf vorgesehen sein, dass zunächst die Faltabdeckungs-Halteeinrichtung, insbesondere eine Faltabdeckungs-Kassette als Faltabdeckungs-Halteeinrichtung, zunächst an einem ersten Förderwagen festgelegt wird, so dass die Faltabdeckung dann bereits entsprechend positions- und lagegenau gehaltert ist. Anschließend braucht dann lediglich noch die Faltabdeckung selbst an dem zweiten Förderwagen festgelegt werden, in dem beispielsweise eine endseitige Lamelle in Richtung des zweiten Förderwagens gezogen und dort beispielsweise eingehängt wird, wie dies nachfolgend noch näher beschrieben wird. Durch die lösbare Festlegung der Faltabdeckung am zweiten Förderwagen ist dabei sichergestellt, dass eine einfache Separierung und Freigabe des Spaltbereiches, beispielsweise im Rahmen der Demontage, erfolgen kann.

Gemäß einer diesbezüglich konkreten Ausgestaltung kann die wenigstens eine erste Befestigungseinrichtung durch wenigstens eine Befestigungsleiste gebildet sein, die mittels mehrerer in Spalt-Längsrichtung beabstandeter Schraubverbindungen am ersten Förderwagen festlegbar ist.

Eine derartige Befestigungsleiste gewährleistet in Verbindung mit den in Spalt-Längsrichtung beabstandeten Schraubverbindungen eine funktionssichere und einfach herstellbare Festlegung, die bei Bedarf auch einfach wieder abgenommen werden kann.

Weiter ist die wenigstens eine weitere Befestigungseinrichtung bevorzugt als Einhängeverbindung ausgebildet, an der die Faltabdeckung, insbesondere eine endseitige Lamelle der Faltabdeckung, einhängbar ist. Eine derartige Einhängeverbindung ist zum einen besonders einfach herstellbar und weist zum anderen eine hohe Funktionssicherheit auf. In diesem Zusammenhang ist eine Ausführungsform vorteilhaft, bei der die Einhängeverbindung durch mehrere voneinander in Spalt- bzw. Faltabdeckungs-Längsrichtung beabstandete und/oder gegenüberliegenden Faltabdeckungs-Endbereichen zugeordnete Einhängestifte gebildet ist, die von dem zweiten Förderwagen abragen, wobei es bevorzugt ist, dass diese in Hochachsenrichtung nach oben abragen, damit das Einhängen vorteilhaft von oben erfolgen kann. Grundsätzlich besteht aber auch die Möglichkeit, dass die Einhängestifte nach unten abragen, so dass dann die Faltabdeckung entsprechend, in Hochachsenrichtung gesehen, von unten eingehängt wird. Alternativ oder zusätzlich ist es besonders vorteilhaft, wenn diese Einhängestifte geeignet und ausgebildet sind, dass die endseitige Lamelle daran, insbesondere bei Kurvenfahrten, entlanggleiten kann, ohne gelöst zu werden. Im Gegensatz zu einer grundsätzlich auch möglichen festen Anbindung verringern sich dadurch die auf die Faltabdeckung bzw. die endseitige Lamelle einwirkende Belastung und erhöht sich dadurch die Lebensdauer der Faltabdeckung.

Die Faltabdeckung selbst ist bevorzugt durch eine zieharmonikaartig oder zickzackartig gefaltete Materialbahn gebildet, wobei bevorzugt vorgesehen ist, dass die einzelnen Faltabschnitte in Faltabdeckungs-Längsrichtung verlaufende Lamellen ausbilden, die wechselweise obere Verbindungsbereiche und untere Verbindungsbereiche aufweisen. Eine derartige, auch als Leporellofaltung bezeichnete Faltung zeichnet sich durch eine sehr robuste Bauweise aus, die einfach in der Herstellung ist und eine hohe Funktionssicherheit über eine sehr lange Lebensdauer gewährleistet. Eine derartige zieharmonikaartige oder zickzackartig gefaltete Materialbahn lässt sich somit einfach herstellen und stellt eine besonders einfache Art und Weise dar, die gewünschten Ausgleichsbewegungen zwischen zwei unmittelbar aufeinander folgenden Förderwagen herzustellen. Dass die Lamellen obere und untere Verbindungsbereiche aufweisen, bedeutet nicht, dass die Lamellen jeweils separate, miteinander zu verbindende Bauteile sind, wenngleich das natürlich auch der Fall sein kann. Die Verbindung zwischen zwei Lamellen kann aber natürlich auch materialeinheitlich und einstückig ausgebildet sein. Insofern dienen die Begrifflichkeiten obere und untere Verbindungsbereiche lediglich dazu, einen Wechsel oder Übergang von der einen Lamelle zur nächsten Lamelle zu kennzeichnen.

Gemäß einer weiteren besonders bevorzugten Ausgestaltung ist vorgesehen, dass die Faltabdeckung wenigstens ein die Faltabdeckung versteifendes Versteifungselement aufweist, wobei bevorzugt vorgesehen ist, dass das wenigstens eine Versteifungselement leisten- und/oder stabartig ausgebildet ist und sich in Faltabdeckungs-Längsrichtung entlang wenigstens einer zugeordneten Lamelle oder zwischen zwei Lamellen erstreckt. Mit einem derartigen Versteifungselement gelingt auf einfache und funktionssichere Weise eine gewünschte Gewichtsauslegung der Faltabdeckung, die regelmäßig in der Lage sein muss, Stückgüter mit einem Gewicht von bis zu 20kg, bevorzugt Stückgüter mit einem Gewicht von bis zu 30kg, manchmal sogar Stückgüter mit einem Gewicht von bis zu 50kg und sogar mehr ohne Beschädigung und/oder ohne Durchbiegen der Faltabdeckung aufliegend abzustützen.

Besonders bevorzugt ist hierbei zudem eine konkrete Ausgestaltung, bei der die Faltabdeckung, bevorzugt in einem, in Hochachsenrichtung gesehen, Bereich unterhalb wenigstens eines oberen Verbindungsbereichs, vorzugsweise in einem Bereich unterhalb aller oberer Verbindungsbereiche, eine Tasche, vorzugsweise eine in Hochachsenrichtung ausgerichtete Tasche aufweist, in der wenigstens ein leisten- und/oder stabartiges Versteifungselement aufgenommen ist, wobei sich die Tasche und/oder das Versteifungselement wenigstens über einen Teilbereich der Länge, vorzugsweise über im Wesentlichen die gesamte Länge, der Faltabdeckung erstreckt.

Eine derartige Ausgestaltung trägt wesentlich dazu bei, die Faltabdeckung insgesamt zu stabilisieren und zu versteifen.

Die Materialbahn selbst kann auf unterschiedliche Art und Weise ausgebildet sein. Besonders bevorzugt ist die Materialbahn jedoch durch ein beidseitig, vorzugsweise mit einem wasserabweisenden oder wasserdichten Material, beschichtetes Gewebe gebildet, wobei bevorzugt vorgesehen ist, dass das Beschichtungsmaterial ein thermoplastischer Polyurethan ist. Dadurch ist dann sichergestellt, dass bei eventuell auslaufenden Flüssigkeiten keine Flüssigkeit durch den Spalt hindurch ablaufen und eventuell zu Schäden am Sortierförerer bzw. entlang der Fahrstrecke führen kann.

Die Tasche selbst ist bevorzugt durch ein lediglich taschenaußenseitig und damit einseitig, vorzugsweise mit einem wasserabweisenden oder wasserdichten Material, beschichtetes Gewebe gebildet ist, wobei bevorzugt vorgesehen ist, dass das Beschichtungsmaterial ein thermoplastischer Polyurethan ist. Zudem ist vorgesehen, dass die Tasche in wenigstens einem definierten Anbindungsbereich mit ihrer beschichteten Außenseite mit wenigstens einer beschichteten Lamelle verschweißt ist, vorzugsweise durch Hochfrequenzschweißung verschweißt ist. Die einseitige Beschichtung der Tasche an ihrer den Lamellen zugewandten Außenseite stellt hierbei sicher, dass es beim Verschweißen zu keinem Verkleben der inneren Taschenwände kommen kann.

Gemäß einer besonders bevorzugten Ausgestaltung ist die Tasche U-förmig ausgebildet und sind die freien U-Schenkelenden der Tasche mit ihren beschichteten Außenseiten mit entsprechend zugeordneten, unmittelbar benachbarten beschichteten Lamellen verschweißt, und zwar vorzugsweise an oder nahe eines oberen Verbindungsbereiches der Faltabdeckung verschweißt.

Alternativ oder zusätzlich dazu kann das Versteifungselement aus jedem geeigneten Material hergestellt sein, wobei eine Herstellung aus einem stabilen Kunststoff, Holz, Eisen, Blech oder Aluminium bevorzugt ist. Derartige Materialien sind Materialien, die ein Abknicken der Versteifungselemente unter Last zuverlässig verhindern.

Weiter kann vorgesehen sein, dass dass in einem Zwischenraum zwischen zwei unmittelbar benachbarten Lamellen der Faltabdeckung ein in Hochachsenrichtung ausgerichteter Schwenkzapfen angeordnet ist. Dieser wenigstens eine Schwenkzapfen ist bevorzugt an der Faltabdeckungs-Halteeinrichtung, höchst bevorzugt an dem oberen und unteren Abstützelement gehaltert. Weiter kann in diesem Zusammenhang optional vorgesehen sein, dass der Schwenkzapfen einen Verbindungsbereich der Faltabdeckung, vorzugsweise einen unteren Verbindungsbereich der Faltabdeckung, durchdringt. Alternativ oder zusätzlich soll der Schwenkzapfen geeignet und ausgebildet sein, ein zugeordnetes Versteifungselement in seiner Lage zu halten, insbesondere gegen Verdrehen und/oder Verkanten zu sichern, und/oder ein Schwenklager auszubilden, um das die jeweils zugeordneten Lamellen und/oder Versteifungselemente in der Faltabdeckungs-Horizontalebene, vorzugsweise innerhalb vorgegebener Grenzen, verschwenkbar sind. Dadurch wird bewirkt, dass beim Entfalten einer Seite der Faltabdeckung ein funktionssicheres Zusammenfalten der anderen, in Faltabdeckungs-Längsrichtung gegenüberliegenden Seite der Faltabdeckung erfolgt.

Wie bereits eingangs erwähnt, können die Förderwagen grundsätzlich unterschiedlich ausgebildet sein, so zum Beispiel als Quergurtsorter oder Kippschalensorter. Für hohe Durchsätze mit mehreren zehntausend Sortiergütern bzw. Stückgütern pro Stunde werden jedoch vorzugsweise Quergurtsorter eingesetzt. In diesem Zusammenhang ist es dann besonders vorteilhaft, wenn die Förderwagen zur Ausbildung eines Quergurtsorters jeweils mit einem endlos um Umlenkrollen umlaufenden, quer zur Fahrtrichtung der Förderwagen antreibbaren Quergurt versehen sind. Und weiter ist es in diesem Zusammenhang besonders vorteilhaft, wenn, in Hochachsenrichtung gesehen, oberhalb des Ausgleichselementes eine den Spalt und das Ausgleichselement lediglich teilweise überdeckende Abdeckung, vorzugsweise eine Abdeckplatte als Abdeckung, vorgesehen ist, die an einem ersten der beiden aufeinanderfolgenden Förderwagen befestigt ist und in der Grundstellung, bei parallel zueinander ausgerichteter Vorderkante und Hinterkante der zwei aufeinander folgenden Förderwagen, mit einem Abdeckplatten-Überstand unter den Quergurt des zweiten Förderwagens greift bzw. geführt ist. Eine derartige Abdeckung bzw. Abdeckplatte dient dazu, eventuell verbleibende und von dem Ausgleichselement nicht abgedeckte Spaltreste des Spaltes, wie sie beispielsweise bei Kurvenfahrten entstehen können, funktionssicher und zuverlässig zu überdecken und erhöht damit nochmals die Sicherheit dafür, dass das Stückgut nicht in dem Spalt zwischen zwei Förderwagen fallen kann.

Die Erfindung betrifft weiter auch ein Ausgleichselement zur Verwendung mit Förderwagen eines Sortierförderers gemäß Anspruch 17. Des Weiteren betrifft die Erfindung auch ein Verfahren zum Betreiben eines Sortierförderers nach dem Anspruch 19. Die damit jeweils erzielbaren Vorteile sind identisch mit denjenigen des zuvor ausführlich beschriebenen Sortierförderers. Insofern wird zur Vermeidung von Wiederholungen auf die zuvor gemachten Ausführungen verwiesen.

Die Erfindung wird nachfolgend anhand einer Zeichnung näher erläutert.

Es zeigen:
- Fig. 1: eine schematische Darstellung eines Aufbaus eines Sortierförderers gemäß dem Stand der Technik,
- Fig. 2a: eine schematische Draufsicht auf drei Förderwagen eines Sortierförderers mit Spaltabstand bzw. Spalt zwischen den Förderwagen (ohne Faltabdeckung),
- Fig. 2b: die Darstellung gemäß Figur 2a mit zusätzlich strichliert eingezeichneter Faltabdeckung,
- Fig. 3: eine vergrößerte Detaildarstellung im Bereich der hinteren zwei Förderwagen der Figur 2b,
- Fig. 4: eine schematische, perspektivische Explosionsdarstellung einer als Faltabdeckungs-Kassette ausgebildeten Faltabdeckungs-Halteeinrichtung,
- Fig. 5: eine schematische, perspektivische Darstellung eines Förderwagens in einer Explosionsdarstellung, mitsamt einer in einer Faltabdeckungs-Kassette gehalterten Faltabdeckung,
- Fig. 6a: eine vergrößerte Einzelheit der Faltabdeckung in einer Seitenansicht,
- Fig. 6b: eine vrgrößerte Darstellung der Einzelheit Z der Fig. 6a.

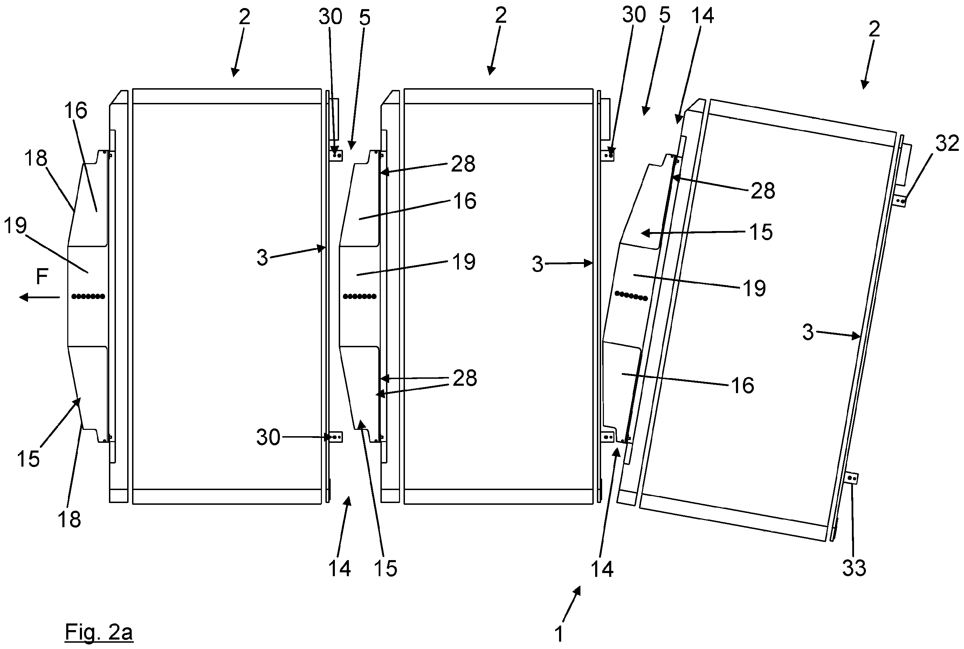

In der Figur 2a ist eine Draufsicht auf hier beispielhaft drei Förderwagen 2 eines Sortierförderers 1 gezeigt, der eine Vielzahl von weiteren, hier nicht insgesamt dargestellten, auf einer Förderband bewegten, zu einem Förderwagenzug gekoppelten Förderwagen 2 aufweisen kann, wobei auf den Förderwagen 2 jeweils ein hier nicht gezeigtes Stückgut aufliegend transportierbar ist.

Wie dies aus der Figur 2a weiter ersichtlich ist, ist zwischen zwei unmittelbar aufeinanderfolgenden Förderwagen 2, insbesondere jeweils zwischen einer Hinterkante 3 eines in Fahrtrichtung F vorderen Förderwagens 2 und einer Vorderkante 4 eines in Fahrtrichtung F hinteren Förderwagens 2 des Förderwagenzuges ein Spaltabstand bzw. Spalt 5 ausgebildet.

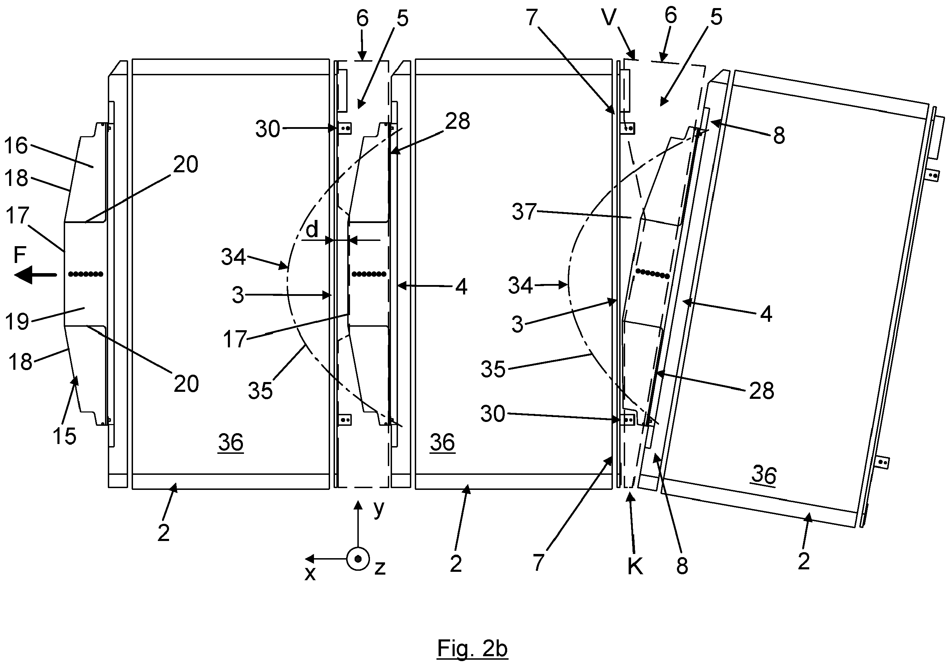

Wie dies nunmehr sehr gut aus der Figur 2b ersichtlich ist, ist zwischen den beiden unmittelbar aufeinanderfolgenden Förderwagen 2 des Förderzuges jeweils eine Faltabdeckung 6 vorgesehen, die hier aus Übersichtlichkeitsgründen lediglich strichliert eingezeichnet ist und die den Spalt 5, bezogen auf die Spaltlängsrichtung y sowie bezogen auf die Spalt-Querrichtung x wenigstens bereichsweise verschließt. Die Faltabdeckung 6 ist hierbei geeignet und ausgebildet, was nachfolgend noch näher erläutert wird, bei fahrbedingten relativen Abstandsänderungen zwischen einem Hinterkantenbereich 7 der Hinterkante 3 des in Fahrtrichtung F vorderen Förderwagens 2 und einem zugeordneten Vorderkantenbereich 8 der Vorderkante des in Fahrtrichtung F hinteren Förderwagens 2 Ausgleichsbewegungen durchzuführen, damit der Spalt 5 mittels der Faltabdeckung 6 im Wesentlichen verschlossen gehalten wird.

Wie dies aus der Figur 2b sehr gut ersichtlich ist, ist bei der hier gezeigten Ausführungsform vorgesehen, dass die Faltabdeckung 6 den Spalt 5 zwischen jeweils zwei unmittelbar aufeinanderfolgenden Förderwagen 2, bezogen auf die Spalt-Längsrichtung y und bezogen auf die Spalt-Querrichtung x, in jeder Fahrsituation im Wesentlichen vollständig verschließt.

Damit wird sichergestellt, dass kein mittels der Förderwagen 2 transportiertes Stückgut (nicht dargestellt) in den Bereich des Spaltes 5 zwischen zwei Förderwagen 2 fallen kann und diese gegebenenfalls zum Entgleisen bringen kann.

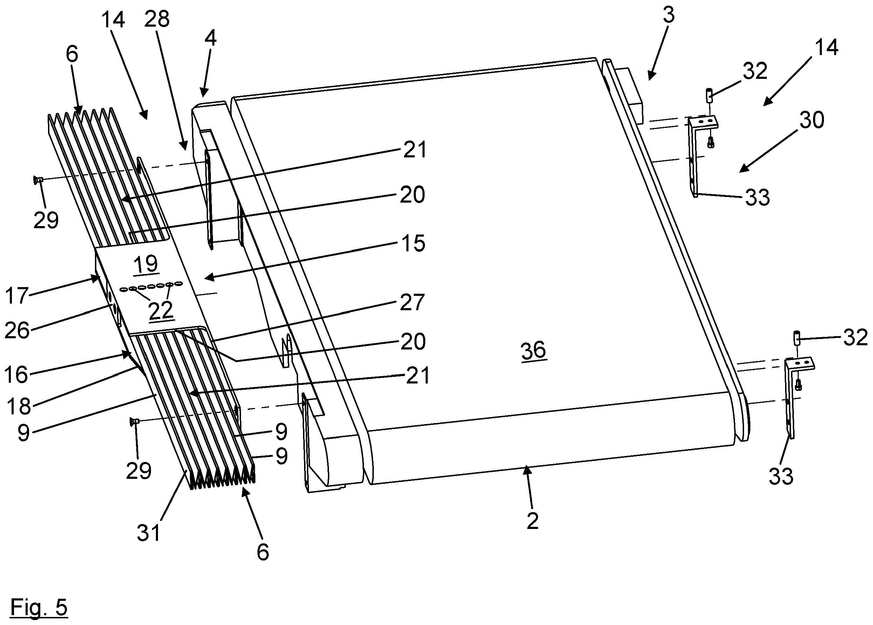

Hierzu ist es weiter besonders bevorzugt, wenn die Faltabdeckung 6, bezogen auf die Hochachsenrichtung z, in einem oberseitigen Bereich der Förderwagen 2, das heißt im Wesentlichen oberflächenbündig mit dem Oberseiten der beiden Förderwagen 2 angeordnet ist, wie dies lediglich schematisch und beispielhaft aus der Darstellung der Figur 5 ersichtlich ist, aus der hervorgeht, dass die Faltabdeckung 6 im montierten Zustand im Wesentlichen oberflächenbündig mit der Oberseite des Förderwagens 2 angeordnet ist.

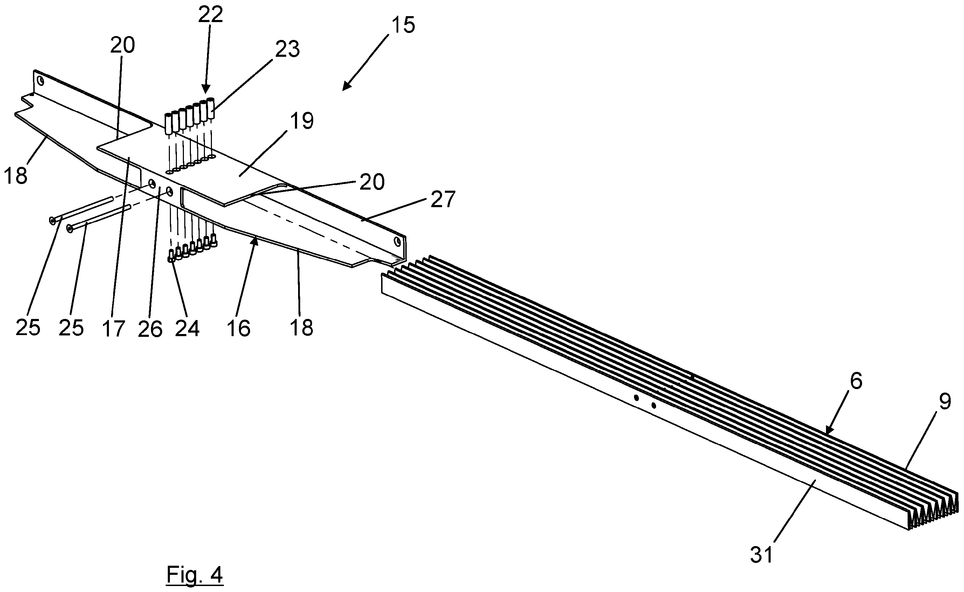

Wie dies weiter aus der Figur 4 ersichtlich ist, ist die Faltabdeckung 6 hier durch eine ziehharmonikaartig oder zickzackartig gefaltete Lamellen-Faltabdeckung mit einer Mehrzahl von einzelnen Lamellen 9 gebildet, die sich zur Durchführung der Ausgleichsbewegungen zwischen den jeweiligen Hinterkantenbereichen 7 der in Fahrtrichtung F vorderen Förderwagen 2 und den zugeordneten Vorderkantenbereichen 8 der in Fahrtrichtung F hinteren Förderwagen 2 bei einer Abstandsvergrößerung V entfaltet und bei einer Abstandsverringerung K zusammenfaltet.

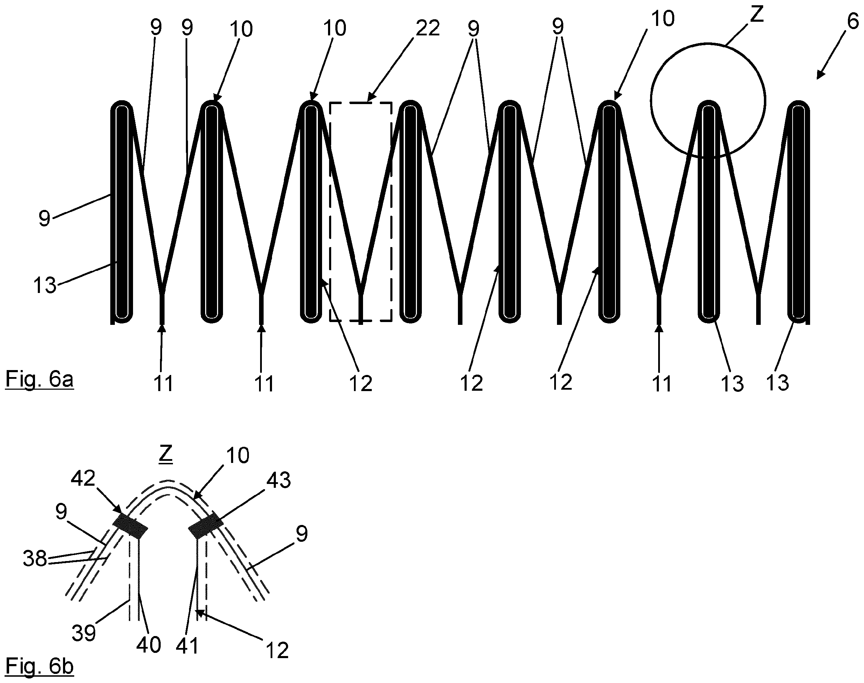

Wie dies insbesondere aus der Figur 6a ersichtlich ist, ist die Faltabdeckung 6 beispielsweise durch eine ziehharmonikaartig oder zickzackartig gefaltete Materialbahn gebildet, wobei die einzelnen Faltabschnitte in Faltabdeckungs-Längsrichtung verlaufende Lamellen 9 ausbilden, die wechselweise obere Verbindungsbereiche 10 und unteren Verbindungsbereiche 11 aufweisen. Im hier gezeigten Beispielfall verbinden die oberen Verbindungsbereiche 10 die dort zusammengeführten Lamellen 9 materialeinheitlich und einstückig, sind also Bestandteil ein und derselben Materialbahn. Demgegenüber sind die Lamellen 9 im hier gezeigten Beispielfall an den unteren Verbindungsbereichen 11 lediglich beispielhaft miteinander durch z.B. Schweißen, insbesondere Hochfrequenzschweißen, verbunden, also sind dort auch zwei Materialbahnen miteinander verbunden. Selbstverständlich ist dies auch genau andersherum möglich, also unten materialeinheitlich und einstückig und oben verbunden. Ebenso können beide Verbindungsbereich 10, 11 auch jeweils identisch ausgebildet sein.

Die Faltabdeckung 6 weist hier im Bereich der oberen Verbindungsbereiche 10 jeweils eine in Hochachsenrichtung z nach unten abragende Tasche 12 auf, in der hier lediglich beispielhaft ein leistenartiges Versteifungselement 13 aufgenommen ist, wobei sich die Tasche 12 mitsamt dem Versteifungselement 13 hier zudem beispielhaft im Wesentlichen über die gesamte Länge der Faltabdeckung 6 erstreckt.

Die Materialbahn der Lamellen 9 ist hier, was insbesondere aus der Fig. 6b ersichtlich ist, durch ein beidseitig, vorzugsweise mit einem wasserabweisenden oder wasserdichten Material, beschichtetes Gewebe gebildet ist, wobei bevorzugt vorgesehen ist, dass das Beschichtungsmaterial bzw. die doppelseitige Beschichtung 38 durch ein thermoplastischer Polyurethan gebildet ist.

Die Tasche 12 ist dagegen durch ein lediglich taschenaußenseitig und damit einseitig, vorzugsweise mit einem wasserabweisenden oder wasserdichten Material, beschichtetes Gewebe gebildet ist, wobei bevorzugt vorgesehen ist, dass das Beschichtungsmaterial bzw. die einseitige Beschichtung 39 durch ein thermoplastischer Polyurethan gebildet ist.

Wie dies weiter insbesondere aus der Fig. 6b ersichtlich ist, ist die Tasche 12 in zwei Anbindungsbereichen 42, 43 mit ihrer beschichteten Außenseite mit jeweils einer beschichteten Lamelle 9 verschweißt, vorzugsweise durch Hochfrequenzschweißung verschweißt. Konkret ist hierzu beispielsweise vorgesehen, dass die Tasche 12 U-förmig ausgebildet ist und die freien U-Schenkelenden 40, 41 der Tasche 12 mit ihren beschichteten Außenseiten mit den entsprechend zugeordneten, beschichteten Lamellen 9 verschweißt sind, vorzugsweise an oder nahe eines oberen Verbindungsbereiches 10 der Faltabdeckung 6 verschweißt sind, wie dies in der Figur 6a dargestellt ist.

Das Versteifungselement 13 kann beispielsweise aus Blech oder Aluminium gebildet sein.

Zur Anordnung und Festlegung der Faltabdeckung 6 im Bereich des Spaltes 5 ist eine Montageeinrichtung 14 vorgesehen, mittels der die Faltabdeckung 6 im hier gezeigten Beispielfall zum einen jeweils an der Hinterkante 3 des in Fahrtrichtung F vorderen Förderwagens 2 und zum anderen jeweils an der Vorderkante 4 des in Fahrtrichtung F hinteren Förderwagens 2 befestigt ist.

Hierzu weist die Montageeinrichtung 14 eine als Faltabdeckungs-Kasette ausgebildete Faltabdeckung-Halteeinrichtugn 15 auf, mittels der die Faltabdeckung 6, bezogen auf die Hochachsenrichtung z, von oben und von unten her abstützbar ist und mittels der die Faltabdeckung 6 im Spalt 5 lage- und postionsgenau festlegbar ist, hier beispielhaft und in nachstehend noch näher beschriebener Weise jeweils an der Vorderkante 4 des in Fahrtrichtung F hinteren Förderwagens 2 festlegbar ist.

Im hier gezeigten Beispielfall weist die als Faltabdeckungs-Kasette ausgebildete Fatabdeckungs-Halteeinrichtung 15, wie das sehr gut aus der Figur 4 ersichtlich ist, ein, bezogen auf die Hochachsenrichtung z, unteres Abstützelement 16 auf, die hier durch eine untere Abstützplatte gebildet ist. Dieses als Abstützplatte ausgebildete untere Abstützelement 16 verläuft somit unterhalb der Faltabdeckung 6 und stützt diese aufliegend ab, was insbesondere sehr gut aus der Figur 5 ersichtlich ist.

Wie dies weiter der Figur 5 in Zusammenschau mit der Figur 4 zu entnehmen ist, stützt das untere Abstützelement 16 die Faltabdeckung 6 auf ihrer Unterseite dergestalt ab, dass sie mehr als die Hälfte der Längserstreckungsrichtung der Faltabdeckung 6 überdeckt.

Das als Abstützplatte ausgebildete untere Abstützelement 16 ist, wie dies insbesondere den Figuren 2a und 2b zu entnehmen ist, im Grundzustand bei parallel zueinander ausgerichteter Vorderkante 4 und Hinterkante 3 zweier aufeinanderfolgender Förderwagen 2 (die beiden in der Bildebene der Figuren 2a und 2b linken Förderwagen 2) dergestalt an der Vorderkante 4 des in Fahrtrichtung hinteren Förderwagens 2 angeordnet, das eine, der Hinterkante 3 des jeweils in Fahrtrichtung F vorderen Förderwagens 2 zugewandte vordere Abstützelementekante 17 einen Spaltabstand d zu einer Hinterkante 3 des in Fahrtrichtung F vorderen Förderwagens 2 aufweist und, im hier gezeigten Beispielfall, zudem parallel zu der Hinterkante 3 des in Fahrtrichtung vorderen Förderwagens 2 ausgerichtet ist.

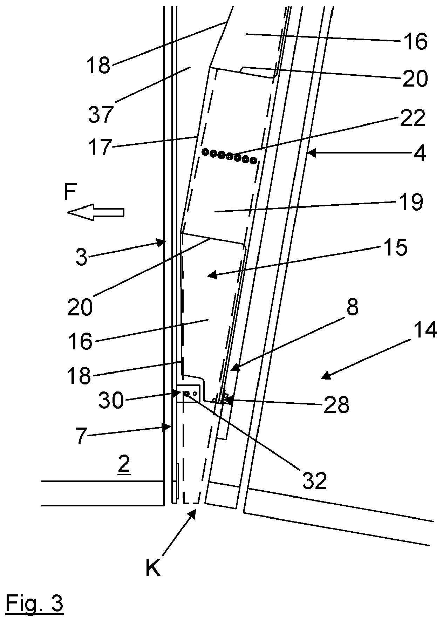

Wie dies weiter auch aus den Figuren 3 und 4 gut ersichtlich ist, weist die vordere Abstützelementkante 17, in Spalt-Längsrichtung y gesehen, zu beiden Seiten eine Abschrägung 18 auf, die hier beispielhaft als geradlinig verlaufende Abschrägung 18 ausgebildet ist. Diese Abschrägung 18 fällt von der vorderen Abstützelementkante 17 ausgehend nach hinten von der vorderen Abstützelementkante 17 weg ab. Diese Abschrägungen 18 sind hier dafür vorgesehen, bei Kurvenfahrten, wie in den Figuren 2a, 2b und 3 dargestellt, eine, gegenüber einer gedachten durchgehend gerade verlaufenden vorderen Abstützelementkante 17, größere winklige Auslenkung zwischen den beiden Förderwagen 2 zu ermöglichen und, nach einem bestimmten Knickwinkel zwischen den beiden Förderwagen, einen Anschlag für den davor bzw. dahinter fahrenden Förderwagen 2 auszubilden. In den Figuren 2a und 2b ist dies in Verbindung mit den beiden, bezogen auf die Bildebene, hinteren Förderwagen gezeigt.

Wie dies aus den Figuren weiter ersichtlich ist, ist das untere Abstützelement 16, bezogen auf die Spaltlänge in Spalt-Längsrichtung y, vorzugsweise in etwa in einem mittleren Bereich des Spaltes 5 angeordnet und erstreckt sich das untere Abstützelement 16 dabei über mehr als die Hälfte der Spaltlänge in Spalt-Längsrichtung y gesehen.

Wie dies insbesondere aus den Figuren 4 und 5 ersichtlich ist, weist die Faltabdeckungs-Halteeinrichtung 15 zur Ausbildung einer Faltabdeckungs-Kasette zudem ein, bezogen auf die Hochachsenrichtung z, oberes Abstützelement 19 auf, das auch hier wiederum beispielhaft durch eine obere Abstützplatte ausgebildet ist. Dieses obere Abstützelement 19 verläuft im montierten Zustand der Faltabdeckung 6, wie dies insbesondere aus der Figur 5 ersichtlich ist, oberhalb der Faltabdeckung 6 und überdeckt die Faltabdeckung 6 auf ihrer Oberseite in einem, bezogen auf die Faltabdeckungs-Längsrichtung, mittleren Faltabdeckungsbereich, so dass die in Spalt-Längsrichtung gegenüberliegenden Abstützelementseitenkanten 20 des oberen Abstützelementes 19 ein Anschlagelement für die, das obere Abstützelement 19 in Spalt-Längsrichtung zu beiden Seiten überstehenden Faltabdeckungsbereiche 21 ausbilden und damit ein Abheben der Faltabdeckung 6 bzw. der beiden überstehenden Faltabdeckungsbereiche 21 in Hochachsenrichtung z ganz bzw. gegebenenfalls auch nach einem definierten Verlagerungsweg blockieren.

Wie dies weiter aus der Zusammenschau der Figuren 4 und 5 sowie auch aus der Figur 6a ersichtlich ist, ist in den Zwischenräumen zwischen zwei unmittelbar benachbarten Lamellen 9 der Faltabdeckung 6 ein in Hochachsenrichtung z ausgerichteter Schwenkzapfen 22 angeordnet, der im hier gezeigten Beispielfall wenigstens den unteren Verbindungsbereich 11 der Faltabdeckung 6 durchdringt. Die Schwenkzapfen 22 dienen dazu, die jeweils zugeordnete Versteifungselemente 13 in ihrer Lage zu halten und zu stabilisieren, insbesondere gegen Verdrehen und/oder Verkanten zu sichern. Zudem bilden sie bevorzugt ein Schwenklager aus, um das die jeweils zugeordneten Lamellen 9 und Versteifungselemente 13 in der Faltabdeckungs-Horizontalebene, vorzugsweise innerhalb vorgegebener Grenzen, verschwenkbar sind, insbesondere dergestalt, dass beim Entfalten einer Seite der Faltabdeckung 6 ein Zusammenfalten der anderen, in Faltabdeckungs-Längsrichtung gegenüberliegenden Seite der Faltabdeckung 6 erfolgt.

Die Schwenkzapfen 22 sind, wie dies insbesondere aus der Figur 4 ersichtlich ist, beispielsweise durch vom oberen Abstützelement 19 her eingesetzte Schraubhülsen 23 gebildet, in die vom unteren Abstützelement 16 her Schrauben 24 eingeschraubt werden.

Zudem sind, was ebenfalls sehr gut aus der Figur 4 ersichtlich ist, hier beispielhaft zwei Fixierbolzen 25 vorgesehen, die die Lamellen 9 in Fahrt- bzw. Querrichtung gesehen, durchdringen und an zwei in Fahrtrichtung gegenüberliegenden Verbindungsstegen gehaltert sind, wobei der in Fahrtrichtung vordere Verbindungssteg 26 derjenige Verbindungssteg ist, von dem her die Fixierbolzen 25 eingesetzt bzw. eingeschraubt werden, während der in Fahrtrichtung F hintere Verbindungssteg hier in einer Doppelfunktion gleichzeitig eine Befestigungsleiste 27 als Bestandteil einer ersten Befestigungseinrichtung 28 der Montageeinrichtung 14 ausbildet, mittels der die als Faltabdeckungs-Kassette ausgebildete Faltabdeckungs-Halteeinrichtung 15 im hier gezeigten Beispielfall (siehe Figur 5) mittels zweier Befestigungsschrauben 29 an der Vorderkante 4 des in Fahrtrichtung F jeweils hinteren Förderwagens 2 festlegbar ist.

Die Montageeinrichtung 14 weist weiter eine weitere, zweite Befestigungseinrichtung 30 auf, die im hier gezeigten Beispielfall als Einhängeverbindung ausgebildet ist, an der eine endseitige Lamelle 31 der Lamellen 9 einhängbar ist. Hierzu weist die als Einhängeverbindung ausgebildete zweite Befestigungseinrichtung 30 im hier gezeigten Beispielfall zwei voneinander in Spalt- bzw. Faltabdeckungs-Längsrichtung y beabstandete und gegenüberliegenden Faltabdeckungsendbereichen zugeordnete Einhängestifte 32 auf, die im hier gezeigten Beispielfall von der Hinterkante 3 des jeweiligen vorderen Förderwagens 2 in Hochachsenrichtung z nach oben abragen. Dies ist sehr gut aus der Figur 5 ersichtlich, wo zudem dargestellt ist, dass die Einhängestifte 32 auf L-förmigen Bügeln 33 gehaltert sind, die mit der Hinterkante 3 des jeweiligen Förderwagens 2 beispielsweise verschraubt sind, vorzugsweise an ohnehin bereits vorhandenen Schraubstellen verschraubt sind. Es reicht hier aus, die beiden gegenüberliegenden Faltabdeckungs-Endbereiche entsprechend aufzufalten und an den Einhängestiften 32 einzuhängen.

Wie dies weiter aus der Figur 2b ersichtlich ist, dort allerdings lediglich schematisch und strichpunktiert eingezeichnet ist, kann zudem, in Hochachsenrichtung z gesehen, oberhalb der Faltabdeckung 6 eine die Faltabdeckung 6 zum Teil überdeckende Abdeckung 34 vorgesehen sein, die hier beispielhaft als Abdeckplatte ausgebildet ist. Diese Abdeckung 34 ist hier wiederum beispielhaft an der Vorderkante 4 der jeweils hinteren Förderwagen 2, und zwar bevorzugt im Bereich derer Befestigungsleiste 27, befestigt und in der Grundstellung, bei parallel zueinander ausgerichteter Vorderkante 4 und Hinterkante 3 zweier aufeinander folgender Förderwagen 2 mit einem Abdeckplatten-Überstand 35 unter einen Quergurt 36 des jeweils vorderen Förderwagens 2 geführt.

In der hier beispielhaft gezeigten Ausführungsform weist die Abdeckung 34 bzw. insbesondere der Abdeckplatten-Überstand 35 eine halbkreisförmige Formgebung auf, die dazu dient, eventuell verbleibende Spaltreste 37 (siehe Figur 2b) des Spaltes 5, wie sie beispielsweise bei Kurvenfahrten entstehen können, funktionssicher und zuverlässig zu überdecken. Die Faltabdeckung 6 selbst ist, in Faltabdeckungs-Längsrichtung y bzw. in Spalt-Längsrichtung gesehen, auf jeden Fall länger als die Abdeckung 34.

In Verbindung mit der Abdeckung 34 ist es zudem vorteilhaft, wenn die Förderwagen 2 zur Ausbildung eines Quergurtsorters jeweils mit einem endlos um Umlenkrollen umlaufenden, quer zur Fahrtrichtung der Förderwagen 2 antreibbaren Quergurt 36 versehen sind, wie es insbesondere in der Figur 5 dargestellt ist.

### Bezugszeichenliste

| | | | |
|---|---|---|---|
| 1 | Sortierförderer | 31 | endseitige Lamelle |
| 2 | Förderwagen | 32 | Einhängestift |
| 3 | Hinterkante | 33 | L-förmige Bügel |
| 4 | Vorderkante | 34 | Abdeckung |
| 5 | Spalt | 35 | Abdeckplatten-Überstand |
| 6 | Faltabdeckung | 36 | Quergurt |
| 7 | Hinterkantenbereich | 37 | Spaltrest |
| 8 | Vorderkantenbereich | 38 | doppelseitige Beschichtung |
| 9 | Lamelle | 39 | einseitige Beschichtung |
| 10 | obere Verbindungsbereiche | 40 | freies U-Schenkelende |
| 11 | untere Verbindungsbereiche | 41 | freies U-Schenkelende |
| 12 | Tasche | 42 | Anbindungsbereich |
| 13 | Versteifungselement | 43 | Anbindungsbereich |
| 14 | Montageeinrichtung | | |
| 15 | Faltabdeckungs-Halteeinrichtung | V | Abstandsvergrößerung |
| 16 | unteres Abstützelement | K | Abstandsverringerung |
| 17 | vordere Abstützelementkante | F | Fahrtrichtung |
| 18 | Abschrägung | d | Spaltabstand |
| 19 | oberes Abstützelement | y | Spalt-Längsrichtung |
| 20 | Abstützelementseitenkante | x | Spalt-Querrichtung |
| 21 | überstehende Faltabdeckungsbereiche | z | Hochachsenrichtung |
| 22 | Schwenkzapfen | | |
| 23 | Schraubhülsen | | |
| 24 | Schrauben | | |
| 25 | Fixierbolzen | | |
| 26 | Verbindungssteg | | |
| 27 | Befestigungsleiste | | |
| 28 | erste Befestigungseinrichtung | | |
| 29 | Befestigungsschrauben | | |
| 30 | zweite Befestigungseinrichtung | | |

## Patentansprüche

1. Sortierförderer (1), insbesondere Quergurtsorter oder Kippschalensorter, zum Transportieren und Sortieren von Stückgut,
mit mehreren, auf einer Förderbahn bewegten, zu einem Förderwagenzug gekoppelten oder individuell verfahrbaren Förderwagen (2), auf dem das Stückgut aufliegend transportierbar ist, wobei zwischen zwei unmittelbar aufeinander folgenden Förderwagen (2) des Förderwagenzuges ein Spalt (5) ausgebildet ist,
**dadurch gekennzeichnet,**
**dass** wenigstens ein Ausgleichselement (6) vorgesehen ist, das den Spalt (5) zwischen den zwei unmittelbar aufeinander folgenden Förderwagen (2), bezogen auf die Spalt-Längsrichtung und/oder die Spalt-Querrichtung, wenigstens bereichsweise verschließt und das geeignet und ausgebildet ist, bei fahrtbedingten relativen Abstandsänderungen zwischen einem Hinterkantenbereich (7) einer Hinterkante (3) des in Fahrtrichtung vorderen Förderwagens (2) und einem zugeordneten Vorderkantenbereich (8) einer Vorderkante (4) des in Fahrtrichtung hinteren Förderwagens (2) Ausgleichsbewegungen durchzuführen, um den Spalt (5) im Wesentlichen verschlossen zu halten.

2. Sortierförderer nach Anspruch 1, **dadurch gekennzeichnet, dass** das wenigstens eine Ausgleichselement (6) den Spalt (5) zwischen zwei unmittelbar aufeinander folgenden Förderwagen (2), bezogen auf die Spalt-Längsrichtung und/oder die Spalt-Querrichtung, überwiegend oder im Wesentlichen vollständig verschließt,

3. Sortierförderer nach einem der vorhergehenden Ansprüche, **dadurch gekennzeichnet, dass** das wenigstens eine Ausgleichselement (6) geeignet und ausgebildet ist, den Spalt (5) durch Ausdehnung des Ausgleichselementes (6) bei einer Abstandsvergrößerung (V) und durch Zusammenziehen des Ausgleichselementes bei einer Abstandsverringerung (K) im Wesentlichen verschlossen zu halten, wobei bevorzugt vorgesehen ist, dass das Ausgleichselement (6) durch ein wenigstens bereichsweise elastisches Element gebildet ist, das sich zur Durchführung der Ausgleichsbewegungen zwischen dem Hinterkantenbereich (7) des in Fahrtrichtung vorderen Förderwagens (2) und dem zugeordneten Vorderkantenbereich (8) des in Fahrtrichtung hinteren Förderwagens (2) bei einer Abstandsvergrößerung (V) elastisch ausdehnt und bei einer Abstandsverringerung (K) elastisch zusammenzieht.

4. Sortierförderer nach einem der vorhergehenden Ansprüche, **dadurch gekennzeichnet, dass** das wenigstens eine Ausgleichselement (6) durch eine Faltabdeckung, vorzugsweise durch eine ziehharmonikaartig oder zickzackartig gefaltete Lamellen-Faltabdeckung mit einer Mehrzahl von Lamellen (9), gebildet ist, die sich zur Durchführung der Ausgleichsbewegungen zwischen dem Hinterkantenbereich (7) des in Fahrtrichtung vorderen Förderwagens (2) und dem zugeordneten Vorderkantenbereich (8) des in Fahrtrichtung hinteren Förderwagens (2) bei einer Abstandsvergrößerung (V) entfaltet und bei einer Abstandsverringerung (K) zusammenfaltet.

5. Sortierförderer nach einem der vorhergehenden Ansprüche, **dadurch gekennzeichnet, dass** wenigstens eine Montageeinrichtung (14) vorgesehen ist, mittels der das wenigstens eine Ausgleichselement (6) zum einen mittelbar oder unmittelbar an der Hinterkante (3) des in Fahrrichtung vorderen Förderwagens (2) und zum anderen mittelbar oder unmittelbar an der Vorderkante (4) des in Fahrrichtung hinteren Förderwagens (2) befestigt ist, vorzugsweise lösbar befestigt ist.

6. Sortierförderer nach Anspruch 4 und 5, **dadurch gekennzeichnet, dass** die wenigstens eine Montageeinrichtung (14) eine Faltabdeckungs-Halteeinrichtung (15), insbesondere eine wenigstens einen Teilbereich der Faltabdeckung (6) aufnehmende Faltabdeckungs-Kassette als Faltabdeckungs-Halteeinrichtung (15), aufweist, mittels der die Faltabdeckung (6), bezogen auf die Hochachsenrichtung, von oben und/oder von unten her abstützbar ist und/oder mittels der die Faltabdeckung (6) im Spalt (5), vorzugsweise lage- und positionsgenau, unmittelbar oder mittelbar an einem der beiden Förderwagen (2), vorzugsweise unmittelbar oder mittelbar an der Hinterkante (3) des in Fahrrichtung vorderen Förderwagens (2) oder an der Vorderkante (4) des in Fahrrichtung hinteren Förderwagens (2), festlegbar ist, vorzugsweise lösbar festlegbar ist.

7. Sortierförderer nach Anspruch 6, **dadurch gekennzeichnet, dass** die Faltabdeckungs-Halteeinrichtung (15), insbesondere eine Faltabdeckungs-Kassette, ein, bezogen auf die Hochachsenrichtung, unteres Abstützelement (16), vorzugsweise eine untere Abstützplatte, aufweist, das unterhalb der Faltabdeckung (6) verläuft, vorzugsweise unterhalb der Faltabdeckung (6) verläuft und die Faltabdeckung (6) aufliegend abstützt, und/oder das die Faltabdeckung (6) auf ihrer Unterseite auf mehr als der Hälfte ihrer Längserstreckungsrichtung überdeckt und/oder abstützt.

8. Sortierförderer nach Anspruch 7, **dadurch gekennzeichnet, dass** das untere Abstützelement (16) im Grundzustand, bei parallel zueinander ausgerichteter Vorderkante (4) und Hinterkante (3) zweier aufeinander folgender Förderwagen (2), dergestalt an einem ersten der beiden Förderwagen (2) angeordnet ist, dass eine dem zweiten Förderwagen (2) zugewandte vordere Abstützelementkante (17) einen Spaltabstand zu dem zweiten Förderwagen (2) aufweist und/oder im Wesentlichen parallel zu der entsprechend zugeordneten Vorderkante (4) oder Hinterkante (3) des zweiten Förderwagens (2) ausgerichtet ist.

9. Sortierförderer nach Anspruch 8, **dadurch gekennzeichnet, dass** die vordere Abstützelementkante (17), in Spalt-Längsrichtung gesehen, zu beiden Seiten eine Abschrägung (18), vorzugsweise eine geradlinig oder gestuft verlaufende Abschrägung (18), aufweist, die von der vorderen Abstützelementkante (17) ausgehend nach hinten von der vorderen Abstützelementkante (17) weg abfällt, wobei bevorzugt vorgesehen ist, dass die Abschrägungen (18) geeignet und ausgebildet sind, bei Kurvenfahrten eine, gegenüber einer gedachten durchgehend gerade verlaufenden vorderen Abstützelementkante (17), größere winklige Auslenkung zwischen den beiden aufeinander folgenden Förderwagen (2) zu ermöglichen und/oder einen Anschlag für den davor oder dahinter fahrenden Förderwagen (2) auszubilden.

10. Sortierförderer nach einem der Ansprüche 6 bis 9, **dadurch gekennzeichnet, dass** die Faltabdeckungs-Halteeinrichtung (15), insbesondere eine Faltabdeckungs-Kassette, ein, bezogen auf die Hochachsenrichtung, oberes Abstützelement (19), vorzugsweise eine obere Abstützplatte, aufweist, das oberhalb der Faltabdeckung (6) verläuft und/oder die Faltabdeckung (6) auf ihrer Oberseite, vorzugsweise in einem bezogen auf die Faltabdeckungs-Längsrichtung mittleren Faltabdeckungsbereich, überdeckt, wobei bevorzugt vorgesehen ist, dass das obere Abstützelement (19) dergestalt oberhalb der Faltabdeckung (6) verläuft und/oder die Faltabdeckung (6) auf ihrer Oberseite überdeckt, dass die in Spalt-Längsrichtung gegenüberliegenden Abstützelementseitenkanten (20) des oberen Abstützelementes (19) ein Anschlagelement für die, das obere Abstützelement (19) in Spalt-Längsrichtung zu beiden Seiten überstehenden Faltabdeckungsbereiche (21) ausbilden und damit ein Abheben der Faltabdeckung (6) bzw. der beiden überstehenden Faltabdeckungsbereiche (21) in Hochachsenrichtung ganz oder nach einem definierten Verlagerungsweg blockieren.

11. Sortierförderer nach Anspruch 10, **dadurch gekennzeichnet, dass** das untere Abstützelement (16) und das obere Abstützelement (19), zur Ausbildung einer Faltabdeckungs-Kassette, mittels wenigstens eines, vorzugsweise in Hochachsenrichtung ausgerichteten, Verbindungssteges (26) miteinander verbunden sind, wobei bevorzugt vorgesehen ist, dass das untere Abstützelement (16) und das obere Abstützelement (19) an ihren in Fahrtrichtung gegenüberliegenden Endbereichen jeweils mittels wenigstens eines Verbindungssteges (26) miteinander verbunden sind.

12. Sortierförderer nach Anspruch 11, **dadurch gekennzeichnet, dass** wenigstens ein Fixierelement (25), vorzugsweise wenigstens ein Fixierstift oder Fixierbolzen, vorgesehen ist, das die Lamellen (9), in Fahrt- bzw. Querrichtung gesehen, durchdringt und/oder das an wenigstens einem Verbindungssteg (26), vorzugsweise an in Fahrtrichtung gegenüberliegenden Verbindungsstegen, gehaltert ist.

13. Sortierförderer nach einem der Ansprüche 5 bis 12, **dadurch gekennzeichnet,**
**dass** die Montageeinrichtung (14) wenigstens eine erste Befestigungseinrichtung (28) aufweist, mittels der die Faltabdeckungs-Halteeinrichtung (15), insbesondere eine Faltabdeckungs-Kassette, an einem ersten der beiden Förderwagen (2) festlegbar ist, wobei bevorzugt vorgesehen ist, dass wenigstens einer der Verbindungsstege der Faltabdeckungs-Halteeinrichtung (15) die erste Befestigungseinrichtung (28) aufweist oder ausbildet, und
**dass** die Montageeinrichtung (14) wenigstens eine weitere Befestigungseinrichtung (30) aufweist, mittels der die Faltabdeckung (6) selbst, vorzugsweise eine dem zweiten Förderwagen (2) zugewandte endseitige Lamelle (31) der Faltabdeckung (6), an dem zweiten Förderwagen (2) festlegbar ist, vorzugsweise lösbar festlegbar ist.

14. Sortierförderer nach einem der vorhergehenden Ansprüche, **dadurch gekennzeichnet, dass** die Faltabdeckung (6) wenigstens ein die Faltabdeckung (6) versteifendes Versteifungselement (13) aufweist, wobei bevorzugt vorgesehen ist, dass das wenigstens eine Versteifungselement (13) leisten- und/oder stabartig ausgebildet ist und sich in Faltabdeckungs-Längsrichtung entlang wenigstens einer zugeordneten Lamelle (9) oder zwischen zwei Lamellen (9) erstreckt.

15. Sortierförderer nach Anspruch 14, **dadurch gekennzeichnet, dass** in einem Zwischenraum zwischen zwei unmittelbar benachbarten Lamellen (9) der Faltabdeckung (6) ein in Hochachsenrichtung ausgerichteter Schwenkzapfen (22), bevorzugt ein an der Faltabdeckungs-Halteeinrichtung (15), höchst bevorzugt ein an dem oberen und unteren Abstützelement (16, 19) gehalterter, Schwenkzapfen (22) angeordnet ist, der einen Verbindungsbereich der Faltabdeckung (6), vorzugsweise einen unteren Verbindungsbereich (11) der Faltabdeckung (6), durchdringt und/oder der geeignet und ausgebildet ist, ein zugeordnetes Versteifungselement (13) in seiner Lage zu halten, insbesondere gegen Verdrehen und/oder Verkanten zu sichern, und/oder ein Schwenklager ausbildet, um das die jeweils zugeordneten Lamellen (9) und/oder Versteifungselemente in der Faltabdeckungs-Horizontalebene, vorzugsweise innerhalb vorgegebener Grenzen, verschwenkbar sind, insbesondere dergestalt, dass beim Entfalten einer Seite der Faltabdeckung (6) ein Zusammenfalten der anderen, in Faltabdeckungs-Längsrichtung gegenüberliegenden Seite der Faltabdeckung (6) erfolgt.

16. Sortierförderer nach einem der vorhergehenden Ansprüche, **dadurch gekennzeichnet, dass** die Förderwagen (2) zur Ausbildung eines Quergurtsorters jeweils mit einem endlos um Umlenkrollen umlaufenden, quer zur Fahrtrichtung der Förderwagen (2) antreibbaren Quergurt (36) versehen sind, wobei bevorzugt vorgesehen ist, dass, in Hochachsenrichtung gesehen, oberhalb des Ausgleichselementes (6) eine den Spalt (5) und das Ausgleichselement (6) lediglich teilweise überdeckende Abdeckung (34), vorzugsweise eine Abdeckplatte, vorgesehen ist, die an einem ersten der beiden aufeinander folgenden Förderwagen (2) befestigt ist und in der Grundstellung, bei parallel zueinander ausgerichteter Vorderkante (4) und Hinterkante (3) der zwei aufeinander folgenden Förderwagen (2), mit einem Abdeckplatten-Überstand (35) unter den Quergurt (36) des zweiten Förderwagens (2) geführt ist.

17. Ausgleichselement zur Verwendung mit Förderwagen eines Sortierförderers, insbesondere eines Sortierförderers nach einem der vorhergehenden Ansprüche,
**dadurch gekennzeichnet,**
**dass** Ausgleichselement (6) geeignet und ausgebildet ist, einen Spalt (5) zwischen zwei unmittelbar aufeinander folgenden Förderwagen (2), bezogen auf die Spalt-Längsrichtung und/oder die Spalt-Querrichtung, wenigstens bereichsweise zu verschließen,
**dass** das Ausgleichselement (6) geeignet und ausgebildet ist, bei fahrtbedingten relativen Abstandsänderungen zwischen einem Hinterkantenbereich (7) einer Hinterkante (3) eines in Fahrtrichtung vorderen Förderwagens (2) und einem zugeordneten Vorderkantenbereich (8) einer Vorderkante (4) eines in Fahrtrichtung hinteren Förderwagens (2) Ausgleichsbewegungen durchzuführen, um den Spalt (5), vorzugsweise durch Ausdehnung des Ausgleichselementes (6) bei einer Abstandsvergrößerung (V) und durch Zusammenziehen des Ausgleichselementes (6) bei einer Abstandsverringerung (K), im Wesentlichen verschlossen zu halten.

18. Verfahren zum Betreiben eines Sortierförderers, insbesondere eines Sortierförderers nach einem der Ansprüche 1 bis 16,
wobei der Sortierförderer (1) mehrere auf einer Förderbahn bewegte, zu einem Förderwagenzug gekoppelte oder individuell verfahrbare Förderwagen (2), auf dem das Stückgut aufliegend transportierbar ist, aufweist, wobei zwischen zwei unmittelbar aufeinander folgenden Förderwagen (2) des Förderwagenzuges ein Spalt (5) ausgebildet ist,
**dadurch gekennzeichnet,**
**dass** wenigstens ein Ausgleichselement (6) vorgesehen ist, das geeignet und ausgebildet ist, einen Spalt (5) zwischen zwei unmittelbar aufeinander folgenden Förderwagen (2), bezogen auf die Spalt-Längsrichtung und/oder die Spalt-Querrichtung, wenigstens bereichsweise zu verschließen,
**dass** das Ausgleichselement (6) geeignet und ausgebildet ist, bei fahrtbedingten relativen Abstandsänderungen zwischen einem Hinterkantenbereich (7) einer Hinterkante (3) eines in Fahrtrichtung vorderen Förderwagens (2) und einem zugeordneten Vorderkantenbereich (8) einer Vorderkante (4) eines in Fahrtrichtung hinteren Förderwagens (2) Ausgleichsbewegungen durchzuführen, um den Spalt (5), vorzugsweise durch Ausdehnung des Ausgleichselementes bei einer Abstandsvergrößerung (V) und durch Zusammenziehen des Ausgleichselementes (6) bei einer Abstandsverringerung (K), im Wesentlichen verschlossen zu halten.
